# FASCICULE DE BREVET EUROPEEN

(11) **EP 0 808 701 B1**
(45) Date de publication et mention de la délivrance du brevet: **04.12.2002**
(21) Numéro de dépôt: 97107978.5
(22) Date de dépôt: 16.05.1997
(51) Int. Cl.: B28D 5/04, B23D 57/00

(54) **Dispositif de sciage par fil**
Drahtsäge
Wire saw

(30) Priorité: 23.05.1996 CH 129596
(43) Date de publication de la demande: 26.11.1997
(73) Titulaire: HCT Shaping Systems SA, 1033 Cheseaux (CH)
(72) Inventeur: Hauser, Charles, 1272 Genolier (CH)
(74) Mandataire: Micheli & Cie

(56) Documents cités:
- DE-A- 19 517 107
- PATENT ABSTRACTS OF JAPAN vol. 013, no. 153 (M-813), 13 avril 1989 & JP 63 312057 A (NIPPON MINING CO LTD), 20 décembre 1988,
- PATENT ABSTRACTS OF JAPAN vol. 097, no. 007, 31 juillet 1997 & JP 09 066520 A (NIPPEI TOYAMA CORP), 11 mars 1997,

## Description

La présente invention concerne un dispositif de sciage par fil comprenant une nappe de fils tendue entre au moins deux cylindres guide-fils et maintenue en position par des gorges taillées sur la surface desdits cylindres guide-fils qui définissent l'intervalle entre les fils de ladite nappe de fils, les fils étant susceptibles de se déplacer selon un mouvement alternatif ou continu en appui contre une pièce à scier fixée sur une table support.

Dans les dispositifs connus (voir par example DE 195 17 107 A1), la zone de sciage est constituée d'un ensemble de cylindres placés parallèlement. Ces cylindres, appelés guide-fils, sont gravés avec des gorges définissant l'intervalle entre les fils de la nappe, soit l'épaisseur des tranches. La pièce à scier est fixée sur une table support qui se déplace perpendiculairement à la nappe de fils. La vitesse de déplacement définit la vitesse de coupe. Le renouvellement du fil, ainsi que le contrôle de sa tension se fait dans une partie appelée zone de gestion du fil située en dehors de la zone de sciage proprement dite. L'agent qui régira la découpe est soit un abrasif fixé sur le fil, soit un abrasif libre amené sous forme de barbotine. Le fil n'agit que comme transporteur.

Lors de la découpe en tranches fines de la pièce à scier, le fil tendu est à la fois guidé et tracté par les cylindres guide-fils. Ces cylindres généralement revêtus d'une couche synthétique sont gravés avec des gorges dont la géométrie et les dimensions doivent être d'une grande précision. De plus, lorsque la pièce à scier est un mon-cristal, la direction de sciage a une grande importance, donc également la direction du fil par rapport au mono-cristal lui-même et conséquemment par rapport à la table support de la pièce à scier. Pour obtenir une grande précision, un dispositif de réglage de la table support par rapport aux fils de la nappe est généralement prévu et réalisé sous la forme d'un plateau tournant réglable en rotation placé entre la machine et la table support. La table support devient alors table rotative. Dans la plupart des cas cette rotation est utilisée comme réglage fin, l'orientation principale est réalisée extérieurement au dispositif de sciage et le réglage fin ne dépasse guère quelques degrés. La mise en oeuvre d'un plateau rotatif de grande précision et sans jeu dans un milieu pollué par de l'abrasif pose quelques difficultés notamment en ce qui concerne sa protection. De plus, la superposition d'éléments mécaniques situés sous la pièce à scier diminue la rigidité donc la précision générale du dispositif de sciage. La place prévue pour l'insertion de l'élément mécanique rotatif destiné à l'orientation du fil par rapport à la table support augmente la hauteur, le poids et l'encombrement général du dispositif de sciage, donc les difficultés d'implantation, de transport et son prix de fabrication, étant donné le nombre de pièces élevé.

La présente invention a pour but de remédier à ces inconvénients et elle est caractérisée à cet effet par le fait que le dispositif de sciage comprend des moyens pour orienter angulairement la nappe de fils par rapport à la table support angulairement fixe et pour conférer à ladite nappe de fils une fonction de rotation par rapport à la table support, donc par rapport à la pièce à scier.

Par ces caractéristiques, la hauteur et l'encombrement général du dispositif de sciage peuvent être réduits. Le transport et l'implantation du dispositif sont facilités. Le prix de fabrication et le nombre de pièces peuvent être maintenus bas, tout en obtenant un ensemble plus simple d'emploi, plus rigide donc plus robuste.

De manière générale, l'alignement en direction de la table support avec la nappe de fils peut être réalisé de trois manières différentes.
1) En orientant la table support par rapport à la nappe de fils fixe. Utilisation d'une table rotative.
2) En orientant la nappe de fils par rapport à la table support fixe. Utilisation d'une nappe rotative.
3) En orientant la table support avec la nappe de fils, les deux étant réglables séparément. Utilisation simultanée d'une table et d'une nappe rotatives.

Le cas 1) correspond aux dispositifs connus. Le cas 3) ne présente aucun avantage car il cumule les inconvénients des deux premières méthodes.

Par contre, pour un alignement en direction qui ne nécessite en général pas de grandes corrections, le cas 2) en réalisant l'alignement de la nappe de fils par rapport à la table fixe présente un concept nouveau de nappe de fils rotative qui peut être réalisé en tournant la nappe de fils elle-même, au moyen par exemple d'une translation axiale de l'un des guide-fils adjacent à la pièce à scier. Cette translation de l'un des guide-fils adjacent va entraîner une rotation de la direction des fils de la nappe permettant ainsi de l'aligner avec la table support. La translation axiale de l'un des guide-fils peut être effectuée de manière mécanique, manuelle ou électrique, par exemple avec l'aide d'une vis centrée sur le guide-fils, ou hydraulique ou pneumatique par un vérin correspondant. La table support se déplaçant selon un axe perpendiculaire à la nappe de fils rotative, le réglage de l'orientation de la nappe de fils rotative par rapport à la table support peut être alors aisément contrôlé à l'aide d'un système optique ou vidéo simple ou double intégré dans la partie fixe du dispositif de sciage et visant selon une direction parallèle à l'axe de déplacement de la table support. De préférence, les deux objectifs d'un système optique ou les deux caméras d'un système vidéo seront positionnés sur une direction parallèle à la direction des fils de la nappe de fils rotative dans leur position finale de travail.

L'utilisation d'une table rotative ne permet pas une intégration aisée dans la partie fixe du dispositif de sciage, d'un système optique ou vidéo de contrôle. Celui-ci devrait être intégré dans la partie rotative, ce qui complique considérablement la construction.

Le dispositif de sciage selon l'invention, de par son concept de nappe de fils rotative, permet d'orienter la nappe de fils par rapport à la table support en effectuant une rotation de la nappe de fils, de limiter ainsi le nombre de pièces mécaniques nécessaires par rapport à la table rotative, et de diminuer la complexité de l'ensemble tout en augmentant la rigidité du dispositif de sciage. De plus, l'intégration permanente d'un système optique ou vidéo de contrôle facilite la tâche de l'opérateur tout en minimisant les risques d'erreurs de réglage.

L'utilisation du concept de nappe de fils rotative permet donc de réaliser un dispositif de sciage performant ayant une productivité élevée, une précision moyenne accrue par l'augmentation de la rigidité et permettant aisément de régler l'alignement de la table support par la rotation de la nappe de fils rotative.

D'autres avantages ressortent des caractéristiques exprimées dans les revendications dépendantes et de la description exposant ci-après l'invention plus en détail à l'aide de dessins qui représentent schématiquement et à titre d'exemple différents modes d'exécution.

La figure 1a est une vue en perspective d'un premier mode d'exécution.

La figure 1b illustre en perspective un dispositif connu.

Les figures 2a, respectivement 2b sont des vues de la nappe de fils et de la pièce à scier de la figure 1a, respectivement de la figure 1b.

La figure 3 représente une coupe détaillée à travers un cylindre guide-fils de la figure 1a.

La figure 4 est une vue en perspective d'un second mode d'exécution.

La figure 5 est une vue en perspective d'un troisième mode d'exécution.

En référence à la figure 1a, une pièce à scier 1 est mise en appui contre une nappe de fils 2 supportée par des cylindres guide-fils 4,5. La table support 3 sur laquelle est fixée la pièce à scier 1 se déplace selon la direction 6. Le cylindre guide-fils 4 est fixe alors que le cylindre guide-fils 5 peut se déplacer axialement donnant une rotation angulaire à la nappe de fils rotative 2 par rapport à la pièce à scier 1.

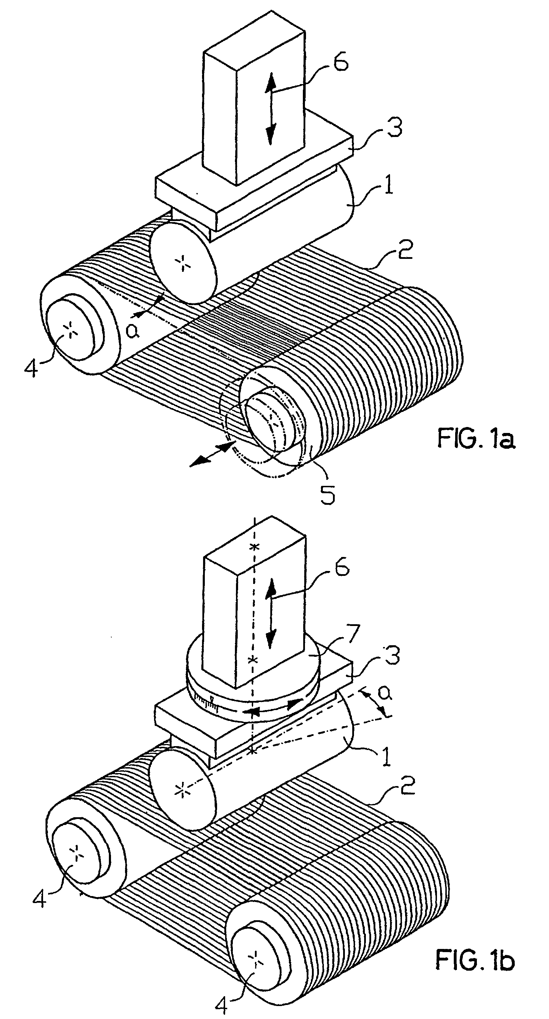

La figure 1b illustre en perspective le principe de la table support rotative connue et utilisée actuellement comme moyen d'alignement. La pièce à scier 1 est mise en appui contre la nappe de fils 2 supportée par les cylindres guide-fils fixes 4. Un plateau rotatif 7 est intercalé entre la table support 3 et la pièce à scier 1. La table support 3 sur laquelle est fixé le plateau rotatif 7 et la pièce à scier 1 se déplace selon la direction 6. La pièce à scier 1 peut tourner sur son axe d'un angle a grâce au plateau rotatif 7.

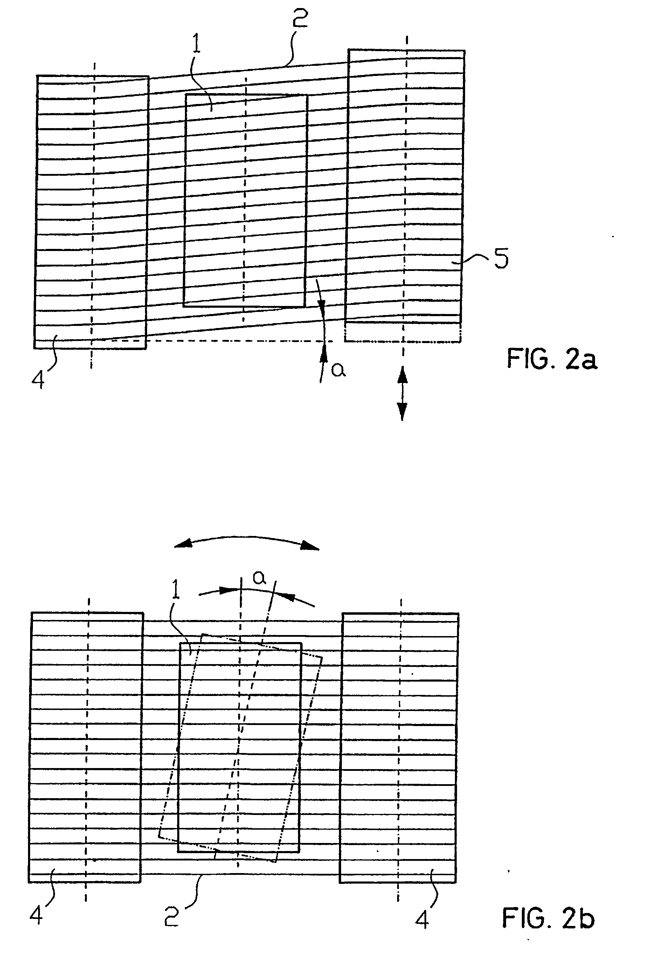

La figure 2a représente schématiquement vu de dessus une possibilité de réaliser le principe de la présente invention. La nappe de fils rotative 2 peut être angulairement ajustée d'un angle a par le déplacement du guide-fils réglable 5 par rapport au guide-fils fixe 4. La pièce à scier 1 est fixe.

La figure 2b représente schématiquement vu de dessus le principe connu utilisé à ce jour. La pièce à scier 1 montée sur la table support rotative peut tourner selon un angle a par rapport à la nappe de fils fixe 2 maintenue par des guide-fils fixes 4.

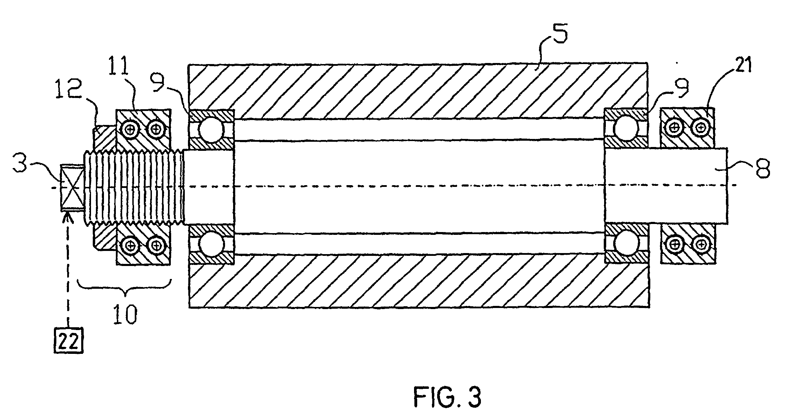

La coupe longitudinale de la figure 3 montre un exemple de mécanisme permettant le déplacement axial d'un des cylindres guide-fils 5 pour le réglage de la nappe de fils rotative. Le cylindre guide-fils 5 est monté tournant autour de l'axe fixe 8 par l'intermédiaire des roulements 9. La palier fixe 10 est constitué d'une bride filetée 11 fixée au bâti (non illustré) du dispositif de sciage et coopérant avec une partie filetée de l'axe fixe 8, d'un écrou de serrage 12 et d'une terminaison carrée 13 permettant le réglage de la position de l'axe 8 donc du guide-fils 5. De l'autre côté, l'axe fixe 8 est maintenu dans la bride 21 solidaire du bâti, mais peut coulisser axialement dans cette dernière. La terminaison carrée 13 peut être tournée pour le réglage angulaire de la nappe de fils par tous moyens 22, par exemple manuellement grâce à une clef, électriquement grâce à un moteur électrique ou encore par des moyens pneumatiques ou hydrauliques. Après le réglage, l'écrou de serrage 12 est sollicité contre la bride filetée 11 de façon à bloquer l'axe 8 dans sa position axiale réglée.

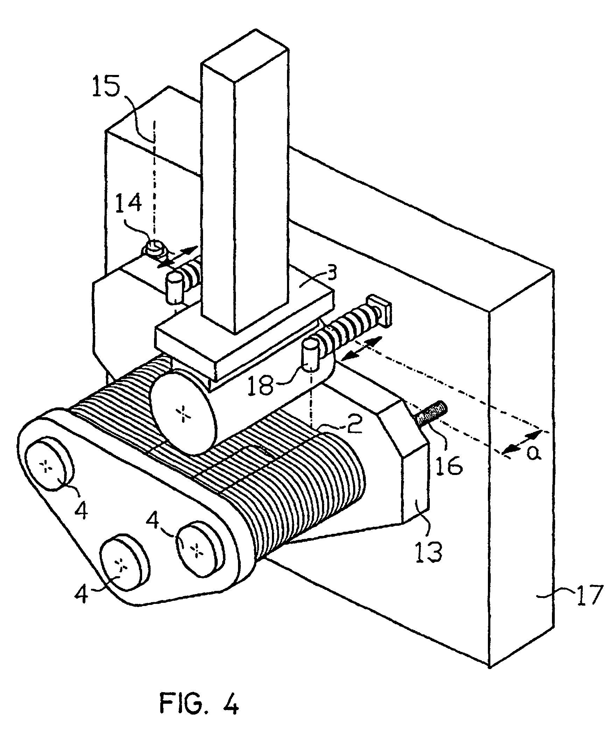

Dans le mode d'exécution représenté à la figure 4, les cylindres guide-fils 4 sont fixés sur une plaque 13. La plaque 13 peut tourner grâce à une charnière 14 autour d'un axe 15 perpendiculaire à la nappe de fils 2. Un mécanisme à vis 16 permet le réglage en rotation de l'angle a de la plaque 13 par rapport au bâti 17 du dispositif de sciage comportant la table support fixe 3 avec la pièce à scier 1. Une installation optique ou vidéo permet le réglage de l'angle a.

Cette installation comprend de préférence deux viseurs optiques 18 ou deux caméras vidéo montés sur le bâti 17 et susceptibles d'être déplacés parallèlement à la nappe de fils 2. Ainsi, en visant un fil prédéterminé de la nappe de fils 2, l'orientation augulaire de cette dernière par rapport à la table support fixe 3 pourra être réglée précisément en connaissant la position occupée par les deux viseurs optiques 18 ou par les deux caméras vidéo.

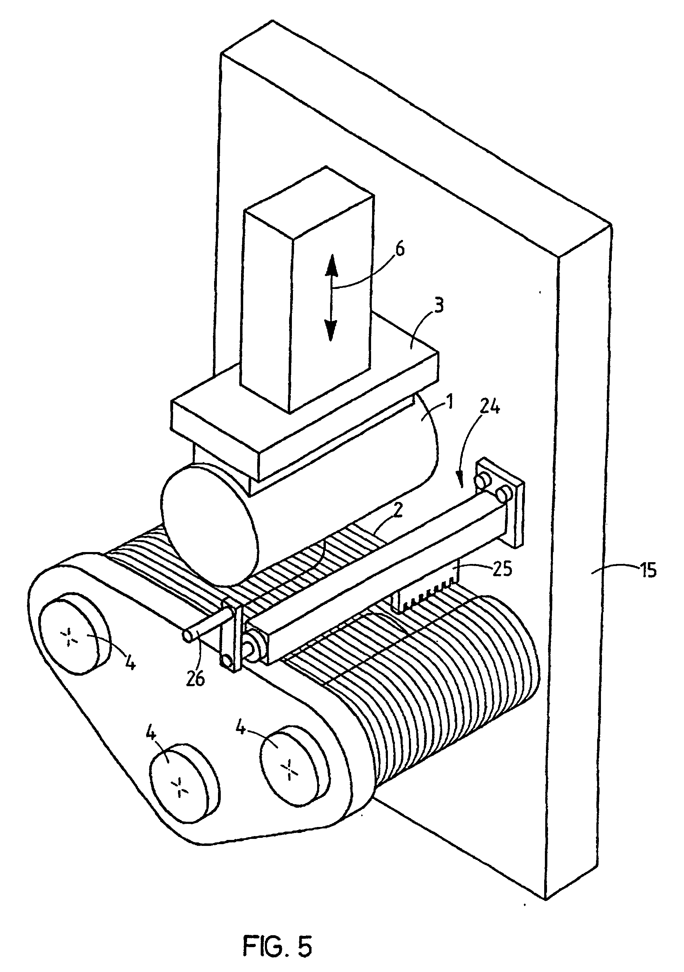

Le mode d'exécution illustré à la figure 5 comporte des cylindres guide-fils 4 fixes, ainsi qu'une table support 3 angulairement fixe, mais susceptible d'être déplacés suivant une direction verticale 6 pour solliciter la pièce à scier 1 contre la nappe de fils 2. Ce mode d'exécution comprend un mécanisme 24 destiné à déplacer tout ou partie des fils de la nappe de fils 2 sur la surface d'au moins un des cylindres guide-fils 4 en décalant les fils dans d'autres gorges prévues sur la surface des cylindres. Ce mécanisme 24 peut comprendre, à cet effet, un peigne 25 susceptible d'entrer en contact avec les fils et de les décaler latéralement sur le guide-fils grâce à une manivelle d'entraînement 26. Ce peigne 25 pourra ainsi déplacer simultanément une partie ou l'ensemble des fils. Il pourra églement être remplacé par un organe, tel qu'un crochet, destiné à effectuer un déplacement fil par fil ou par groupe de fils sur la surface d'un des cylindres guide-fils.

Le fil de sciage formant la nappe de fils 2 entre les cylindres guide-fils 4 est constituée d'acier à ressort d'un diamètre compris entre 0,1 et 0,2 mm afin de scier des blocs de matériaux durs ou exotiques (tels que le silicium, des matériaux céramiques, des composés des groupes III-V, des grenats à gadolinium-gallium, des saphirs, etc) en tranches de 0,1 à 5 mm d'épaisseur environ. L'agent abrasif est un produit du commerce et peut être du diamant, du carbure de silicium, de l'alumine etc sous forme fixée au fil ou sous forme libre en barbotine.

Le concept de la nappe rotative intégrée au dispositif de sciage permet de réaliser un ensemble plus simple d'emploi, plus rigide donc plus robuste, et d'obtenir ainsi un maximum de performances, de productivité de par la simplification des opérations de réglage ou de flexibilité, sans que cela soit au détriment de la qualité des pièces produites.

Il est bien entendu que les modes d'exécution décrits ci-dessus ne présentent aucun caractère limitatif et qu'ils peuvent recevoir toutes modifications désirables à l'intérieur du cadre tel que défini par la revendication 1. En particulier, la réalisation d'une nappe de fils rotative par d'autres types de mécanismes peut être envisagée et qui par leur fonction réalisent la rotation de la nappe de fils par rapport à la table support fixe. L'installation optique ou vidéo décrite en référence à la figure 4 pourrait également être intégrée dans les modes d'exécution illustrés aux figures 1a et 5. Le déplacement angulaire de la plaque 13 ou du peigne 25 pourrait être réalisé par tous moyens mécaniques, électriques, pneumatiques ou hydrauliques.

## Revendications

1. Dispositif de sciage par fil comprenant une nappe de fils (2) tendue entre au moins deux cylindres guide-fils (4) et maintenue en position par des gorges taillées sur la surface desdits cylindres guide-fils (4) qui définissent l'intervalle entre les fils de ladite nappe de fils (2), les fils étant susceptibles de se déplacer selon un mouvement alternatif ou continu en appui contre une pièce à scier (1) fixée sur une table support (3), **caractérisé en ce qu'**il comprend des moyens pour orienter angulairement la nappe de fils (2) par rapport à la table support (3) angulairement fixe et pour conférer à ladite nappe de fils (2) une fonction de rotation par rapport à la table support (3), donc par rapport à la pièce à scier (1).

2. Dispositif selon la revendication 1, **caractérisé en ce que** lesdits moyens sont réalisés par un mécanisme destiné à effectuer une rotation de l'ensemble des guide-fils (4) fixés sur une plaque (13) et **en ce que** ladite plaque (13) est montée tournante par rapport à la table support (3) autour d'un axe (15) perpendiculaire à la nappe de fils (2).

3. Dispositif selon la revendication 1, **caractérisé en ce que** lesdits moyens sont réalisés par un mécanisme destiné à effectuer un déplacement axial d'au moins un cylindre guide-fils ajustable (5).

4. Dispositif selon la revendication 3, **caractérisé en ce que** ledit mécanisme destiné à effectuer un déplacement axial comprend un axe fixe (8) autour duquel est monté de façon tournante le cylindre guide-fils (5), l'axe fixe (8) étant maintenu à ses deux extrémités par des paliers fixes (10,21), au moins un des paliers fixes (10) comportant une bride fixe filetée (11) destinée à coopérer avec une partie filetée de l'axe fixe (8) dont une extrémité (13) est conformée pour coopérer avec un organe d'actionnement et de réglage (22), un écrou de serrage (12) étant prévu pour coopérer avec la bride fixe filetée (11) de façon à bloquer l'axe fixe (8) après orientation de la nappe de fils (2).

5. Dispositif selon la revendication 1, **caractérisé en ce que** lesdits moyens sont réalisés par un mécanisme en forme de peigne agencé de façon à effectuer un décalage de toute ou partie des fils de la nappe de fils (2) sur la surface d'au moins un cylindre guide-fils fixe (4).

6. Dispositif selon la revendication 1, **caractérisé en ce que** lesdits moyens sont réalisés par un mécanisme destiné à effectuer un déplacement fil par fil ou par groupe de fils de la nappe de fils (2) sur la surface d'au moins un cylindre guide-fils fixe (4).

7. Dispositif selon l'une des revendications 1 à 5, **caractérisé en ce que** lesdits moyens sont actionnés manuellement, électriquement, pneumatiquement ou hydrauliquement.

8. Dispositif selon l'une des revendications 1 à 7, **caractérisé en ce qu'**il comprend au moins un organe optique monté sur une partie fixe du dispositif et destiné au contrôle de l'orientation angulaire de la nappe de fils (2) par rapport à la table support (3).

9. Dispositif selon l'une des revendications 1 à 7, **caratérisé en ce qu'**il comprend au moins une caméra vidéo montée sur une partie fixe du dispositif et destinée au contrôle de l'orientation angulaire de la nappe de fils (2) par rapport à la table support (3).

## Patentansprüche

1. Drahtsägevorrichtung mit einer Drahtschicht (2), die zwischen mindestens zwei Drahtführungszylindern (4) gespannt und durch Rillen an Ort und Stelle gehalten wird, die in die Oberfläche der benannten Drahtführungszylinder (4) eingeschnitten sind und den Abstand zwischen den Drähten der benannten Drahtschicht (2) definieren, wobei die Drähte befähigt sind, sich hin- und hergehend oder kontinuierlich zu bewegen, während sie gegen ein zu sägendes Werkstück (1) drücken, das auf einen Auflagetisch (3) montiert ist, **dadurch gekennzeichnet, dass** sie Mittel umfasst, um die Drahtschicht (2) gegenüber dem winkelmässig feststehenden Auflagetisch (3) winkelmässig auszurichten und der benannten Drahtschicht (2) eine Funktion der Drehung gegenüber dem Auflagetisch (3) und somit gegenüber dem zu sägenden Werkstück (1) zu verleihen.

2. Vorrichtung gemäss Anspruch 1, **dadurch gekennzeichnet, dass** die benannten Mittel durch einen Mechanismus realisiert werden, der dazu bestimmt ist, eine Drehung der Gesamtheit der auf einer Platte (13) befestigten Drahtführungen (4) zu bewirken, und dadurch, dass die benannte Platte (13) um eine zur Drahtschicht (2) senkrechte Achse (15) bezüglich des Auflagetisches (3) drehbar montiert ist.

3. Vorrichtung gemäss Anspruch 1, **dadurch gekennzeichnet, dass** die benannten Mittel durch einen Mechanismus realisiert werden, der dazu bestimmt ist, eine Axialverschiebung zumindest eines einstellbaren Drahtführungszylinders (5) zu bewirken.

4. Vorrichtung gemäss Anspruch 3, **dadurch gekennzeichnet, dass** der benannte Mechanismus, der dazu bestimmt ist, eine axiale Verschiebung zu bewirken, eine feststehende Achse (8) umfasst, auf die der Drahtführungszylinder (5) um diese Achse drehbar montiert ist, wobei die feststehende Achse (8) an ihren beiden Enden durch feststehende Lager (10, 21) gehalten wird und zumindest eines der feststehenden Lager (10) einen feststehenden Flansch mit Gewinde (11) umfasst, der dazu bestimmt ist, mit einem Gewindeabschnitt der feststehenden Achse (8) zusammenzuwirken, deren eines Ende (13) so gestaltet ist, dass es mit einem Betätigungs- und Regelorgan (22) zusammenwirken kann, wobei eine Stellmutter (12) dafür vorgesehen ist, mit dem feststehenden Gewindeflansch (11) so zusammenzuwirken, dass nach der Ausrichtung der Drahtschicht (2) die feststehende Achse (8) blockiert wird.

5. Vorrichtung gemäss Anspruch 1, **dadurch gekennzeichnet, dass** die benannten Mittel durch einen Mechanismus in Gestalt eines Kammes realisiert werden, der so eingerichtet ist, dass er eine Versetzung der ganzen oder eines Teiles der Drahtschicht (2) auf der Oberfläche zumindest eines feststehenden Drahtführungszylinders (4) bewirkt.

6. Vorrichtung gemäss Anspruch 1, **dadurch gekennzeichnet, dass** die benannten Mittel durch einen Mechanismus realisiert werden, der dazu bestimmt ist zu bewirken, dass auf der Oberfläche zumindest eines feststehenden Drahtführungszylinders (4) die Drähte der Drahtschicht (2) einer nach dem anderen bzw. als eine Drahtgruppe verschoben werden.

7. Vorrichtung gemäss einem der Ansprüche 1 bis 5, **dadurch gekennzeichnet, dass** die benannten Mittel manuell, elektrisch, pneumatisch oder hydraulisch betätigt werden.

8. Vorrichtung gemäss einem der Ansprüche 1 bis 7, **dadurch gekennzeichnet, dass** sie zumindest ein optisches Organ umfasst, das auf einen feststehenden Abschnitt der Vorrichtung montiert und dazu bestimmt ist, die winkelmässige Ausrichtung der Drahtschicht (2) bezüglich des Auflagetisches (3) zu überwachen.

9. Vorrichtung gemäss einem der Ansprüche 1 bis 7, **dadurch gekennzeichnet, dass** sie zumindest eine Videokamera umfasst, die auf einen feststehenden Abschnitt der Vorrichtung montiert und dazu bestimmt ist, die winkelmässige Ausrichtung der Drahtschicht (2) bezüglich des Auflagetisches (3) zu überwachen.

## Claims

1. A cutting device with wires, including a web (2) of wires held taught between at least two wire guiding cylinders (4) and maintained in position by grooves cut out at the surface of said wire guiding cylinders (4), which define the spacing between the wires of said web (2) of wires, these wires being capable of an alternating or a continuous motion while pressing against the work piece (1) to be cut fastened to a support table (3), **characterized in that** it includes means for orienting angularly the web (2) of wires relative to the support table (3) and for conferring to said web (2) of wires the capacity to rotate relative to the support table (3) and, therefore, relative to the work piece (1) to be cut.

2. A device according to claim 1, **characterized in that** said means are realized by a mechanism designed for producing a rotation of the totality of the wire guides (4) fastened to a plate (13) and **in that** said plate (13) is mounted rotatably relative to the support table (3) around an axis (15) perpendicular to the web (2) of wires.

3. A device according to claim 1, **characterized in that** said means are realized as a mechanism designed for producing an axial displacement of at least one adjustable wire guiding cylinder (5).

4. A device according to claim 3, **characterized in that** said mechanism designed for producing an axial displacement includes a fixed shaft (8) around which is mounted rotatably the wire guiding cylinder (5), the fixed shaft (8) being maintained at its two ends by fixed bearings (10,21) at least one of the fixed bearings (10) including a fixed threaded flange (11) designed for cooperating with a threaded portion of the fixed shaft (8), one end (13) of the shaft being designed for cooperating with an actuator and adjustment member (22), a tightening nut (12) being provided for cooperating with the fixed threaded flange (11) in such a manner as to immobilize the fixed shaft (8) after orienting the web (2) of wires.

5. A device according to claim 1, **characterized in that** said means are realized by a comb shaped mechanism designed for producing a shifting of all the wires of the web (2) of wires or of a portion thereof, along the surface of at least one fixed wire guiding cylinder (4).

6. A device according to claim 1, **characterized in that** said means are realized by a mechanism designed for producing a displacement of the web (2) of wires, one wire by one wire or by groups of wires, along the surface of at least one fixed wire guiding cylinder (4).

7. A device according to one of the claims 1 to 5, **characterized in that** said means are actuated manually, electrically, pneumatically or hydraulically.

8. A device according to one of the claims 1 to 7, **characterized in that** it includes at least one optical member mounted on a fixed part of the device and designed for controlling the angular orientation of the web (2) of wires relative to the support table (3).

9. A device according to one of the claims 1 to 7, **characterized in that** it includes at least one video camera mounted on a fixed part of the device and designed for controlling the angular orientation of the web (2) of wires relative to the support table (3).
